# EUROPEAN PATENT SPECIFICATION

(11) **EP 0 412 046 B1**
(45) Date of publication and mention of the grant of the patent: **15.02.1995**
(21) Application number: 90610049.0
(22) Date of filing: 01.08.1990
(51) Int. Cl.: G01N 35/08

(54) **Method of measuring a component in a liquid**
Verfahren zur Messung eines Bestandteiles in einer Flüssigkeit
Méthode de mesure d'un composant dans un liquide

(30) Priority: 03.08.1989 DK 3821/89
(43) Date of publication of application: 06.02.1991
(73) Proprietor: IMPO ELECTRONIC A/S, DK-5100 Odense C (DK)
(72) Inventor: Andreasen, Finn, DK-5700 Svendborg (DK)
(74) Representative: Larsen, Hans Ole

(56) References cited:
- US-A- 4 328 185
- ANALYTICAL CHEMISTRY, vol. 58, no. 11, September 1986, pages 2258-2264,Washington, DC, US; D. BETTERIDGE et al.: "Versatile automatic developmentsystem for flow injection analysis"

## Description

The invention relates to a method for measuring at least one component in a fluid by the introduction of at least one reagent to a fluid sample, after which a reaction takes place which is measured in a detector.

Measurements of this kind are used especially for laboratory use and are most often effected by introducing a relatively small fluid sample into a fluid stream to which a reagent has been added.

The reagent reacts with the substance in the sample which is desired to be measured, and this reaction is measured in a detector.

This method of measurement is suitable for automation, so that a series of different samples can be measured in a given measurement cycle.

However, the method can be difficult to exercise with sufficient accuracy, particularly for the reason that the reaction can proceed at different reaction rates in the mixture, and since the measurement must be made at the same reaction degree each time out of regard for the registration of the measurement, the reaction time must be accurately determined for each measurement.

This precision is difficult to achieve when using peristaltic pumps, the reason being that the pump tubes change their physical characteristics during use and after the time of operation, which results in a change in the associated rates of flow.

From the description of US Patent no. 4,253,846, there is known an analyzer for automatic fluid analysis. With the method known from this patent, the samples are segmented by means of air bubbles and the injection of an immiscible fluid. The reagents are conveyed to the desired place for the individual sample segments, and time control, absorption measurements and data processing is carried out.

This method is particularly complicated, not least because a complete evacuation of air must exist in order to avoid so-called noise from air bubbles in the sample. This is especially the case when, for example, the mixture has to be heated in order for the speed of reaction to be sufficient for the reaction to be able to be measured. In addition, the fluid which is used must be an organic fluid which, from the environmental point of view, is particularly unfortunate. Moreover, a detection is required for the determination of the sample segments' passage of the reagent injectors.

US patent no. 4,328,185 discloses an automated chemical testing apparatus. In the apparatus a sample is mixed with reagents in thin tubes. As in the above patent, the samples are divided into segments which are separated by an air bubble. This segmentation involves a very complicated flow control of reagent and samples.

The article "Versatile Automatic Development System for Flow Injection Analyses", Analytical Chemistry, vol. 58, no. 11, September 1986, pp. 2258-2264, Washington DC, US, Betteridge et al., discloses an analysis system based on an analytical method called flow injection analyses (FIA). The method involves taking a small sample of a fluid. This sample is introduced into a fluid stream containing a reagent which together with the component in the sample which is to be measured can form a product which can be measured by a detector. The concentration profile of the product requires knowledge of the time passed between injection and measuring. The method does not permit averaging of the signal and is therefore noise sensitive.

It is the object of the invention to remedy these deficiences and to improve the method so that it can be used for measurements in connection with biological processes, where over a longer period a registration of certain process parameters is desired, and this is achieved by a method according to the invention where the mixture of sample and reagent is controlled by a microprocessor which controls a series of valves which convey reagents to the sample, and which also controls a multi-channel pump which feeds a given amount of the sample and the reagents for mixing, after which the mixture is conveyed to the detector.

The necessity of having to segment the samples by means of air and an organic fluid is thus completely avoided, which considerably simplifies the whole of the method.

Furthermore, the sample stream can be continuously mixed with the reagent stream. The possibility is hereby provided for the determination of a component in a sample following a preceding specific chemical reaction between the sample and the reagents. The detector can measure the concentration of the product formed by the reaction by means of a measuring cell, which can be optical, or a measuring instrument which can be an ion-selective electrode or a conductivity detector.

The method is hereby applicable for use in the automatic and continuous measurement of fluids from a sample, such as the measuring of the content of phosphate and nitrite during a fermentation process, or in discharge water in a biological cleaning plant. Similarly, measurements can be made on samples from various forms of processing plants. It is hereby possible to continuously control these processes by registering of the necessary process parameters and, on the basis of these, control the process.

As disclosed in claim 2, by calibrating with more than one standard but applying the same pump channels and tubes, it is possible to measure the reaction long before it is finished since the same measuring point on the curve is obtained each time. This provides a faster reaction time since calibration is continuously updated.

As disclosed in claim 3, by being able to shift between the introduction of reagents or water, it is possible to measure several different components in the same sample by sequentially introducing various reagents followed by measurement, after which another reagent can be introduced and the reaction is measured.

As disclosed in claim 4, by diluting the sample before the reagent is introduced, measurements can be made on samples which contain a higher concentration than the measuring instrument would otherwise be capable of handling.

As disclosed in claim 5, by first measuring the background signal from the actual reagents which are introduced together with the water, and thereafter introducing a standard, the concentration of the sample can easily be calculated.

Finally, as disclosed in claim 6, it is expedient to be able to regulate the flow capacity of the pump, hereby enabling the flow rate to be increased when dealing with samples which produce a strong reaction, so that only a part of the reaction as taken place when the mixture reaches the measuring cell. Conversely, a slow flow will ensure that the reaction has ceased completely before the measurement.

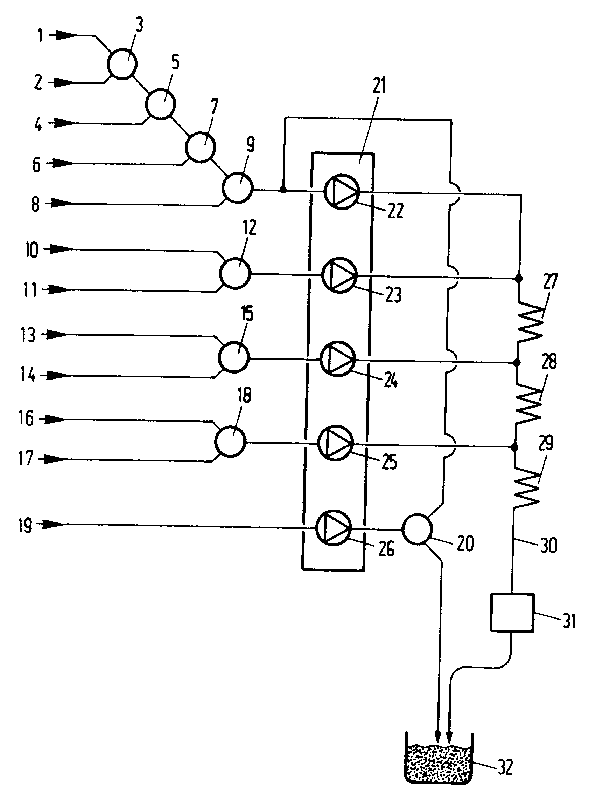

In the following, the invention will be described in closer detail with reference to the drawing, which illustrates an example of an embodiment of the method and an apparatus for the execution of this method.

As will appear from the drawing, a measuring apparatus for the execution of the method includes a multi-channel pump 21 with a number of pump channels which, in the example shown, are the five channels 22, 23, 24, 25 and 26.

The pump can preferably be a peristaltic pump with adjustable speed, so that a microprocessor can regulate the pump capacity of the individual channels.

To the pump 21 are connected a number of inlet channels. Via a three-way valve 9, to the upper pump channel 22 there is thus led the actual sample 8. To the valve 9 there is also connected a further valve 7 for the introduction of a standard 6, and a further valve 5 for a further standard 4. Finally, to the valve 5 there is connected a further valve 3 for the introduction of both a neutral sample 2 and a cleaning fluid 1.

In front of the connection to the pump channel 22 there is also connected an inlet pipe for water 19 via the lower pump channel 26 and a valve 20. From the valve 20, the water 19 can also be led to a collection receptacle 32.

To the next pump channel 23 is connected a valve 12 for the introduction of reagent and water, 10 and 11 respectively, which correspondingly applies to the succeeding two channels 24, 25 which can introduce reagent and water, 13 and 16 respectively, and water 14, 17 via valves 15, 18.

The fluids are led from the pump 21 via an inlet channel to the detector 31, in that mixing shunts 27, 28 and 29 can be inserted after each joining together of two streams or according to requirements in order to ensure the requisite blending.

Where the reaction is slow in relation to the length of the supply channel, an extension channel or retaining channel 30 can be inserted before the detector 31. In this manner, the reaction can be completed before the measurement.

The valves 3, 5, 7, 9, 12, 15, 18 and 20 can all be controlled, like the pump 21, by a microprocessor, so that the measuring, calibration and cleaning of the instrument can be automated.

The method will now be described in closer detail.

In order to ensure a precise concentration measurement, it is necessary that the instrument can be calibrated. This is carried out by introducing water 19 into the pump channel 22, upon which the background signal is measured, and thereafter the desired reagents 10, 13 and 16 are fed to the pump channels 23, 24 and 25, after which the standard signal is measured.

The concentration in the sample can now be calculated as a result of the difference between the sample signal and the background signal divided by the difference between the standard signal and the background signal, which result is multiplied by the concentration of the standard.

When more standards are chosen, e.g. two, the concentration is calculated in a corresponding manner as a result of the difference between the sample signal and the first background signal divided by the difference between the second and first background signal, which result is then multiplied by the difference between the concentration of the second and first standard.

A determination of the concentration can hereby be carried out in those cases where there is no linear correlation between the measurement signal and the concentration of the measured component.

When several different components require to be measured in the same sample 8, the intake of reagents 10, 13, 16 is controlled by a setting of the valves 12, 15, 18. For example, reagent 10 to the pump channel 23 can be used for measuring the content of nitrite, after which reagents 13 and 16 can be introduced and reagent 10 blocked for a measurement of the phosphate contents.

When measurements are to be made on samples which in themselves give rise to a certain background signal, one can start by introducing water 19 and determine the background colour. Hereafter, one can open for reagent and measure background signal and product signal for the reaction between reagent and component. It is important that the introduction of reagent is replaced by an introduction of water, so that during the measurement of the background signal the sample is diluted in exactly the same ratio as during the measurement with reagent. The final value can then be corrected for background noise by subtracting the first signal from the last.

When the samples to be measured have a concentration which is higher than the system can handle, it is possible to introduce a given amount of water 19 to the sample 8 before this is fed to the pump channel 22, which is controlled by the microprocessor. If it is thus found that the measuring point lies above a determined working range, water 19 is introduced into the sample. There is hereby achieved a very wide measuring range from a few ppb to several ppm for a series of components.

During the measurement, the valve settings are held long enough to ensure that the system is flushed completely through and the measurement undertaken. The measurement is carried out be effecting the signal over a period of time, e.g. 10 seconds, whereby the signal becomes less sensitive to fluctuations in the pump stream and possible air bubbles in the fluid.

Since the instrument is auto-calibrated during operation, variations in the flow in the individual pump channels are of no significance to the measurement security.

Finally, as mentioned the microprocessor can control the pump in such a manner that it can adjust the flow in such a way that the reaction in the mixture has taken place when it reaches the measuring cell 31. Conversely, an increase in the speed can result in the reaction only having partly taken place before the measurement, whereby it is possible to measure higher concentrations.

The method is thus particularly suitable for on-line measurements at fermentation plants, cleaning plants and similar installations, where measurements can be made continuously and the results used in a control system for the plant. The consumption of reagent is very low for reason of the small fluid volumes in the instrument, and thus the instrument can be used for long periods of operation without supervision. Moreover, an automatic cleaning of the whole of the system can be effected by introducing cleaning liquid and possibly water for the flushing through of all fluid channels, valves and detector.

## Claims

1. Method for the measurement of at least one component in a fluid by the introduction of a reagent to a fluid sample, after which a reaction takes place which is measured in a detector, by which method the mixture of sample and reagent is controlled by a microprocessor which controls a row of valves (9, 12, 15, 18) which introduce reagents (10, 13, 16) to the sample (8), and controls a multi-channel pump (21) which through a row of pump channels (22, 23, 24, 25) supplies a given amount of the sample (8) and reagents for mixing together (27, 28, 29), after which the mixture is conveyed to the detector (31), **characterized** in that prior to the sampling, water (19) is led to the first pump channel (22) in the multi-channel pump (21), whereupon a background signal is measured, that the required reagents (10, 13, 16) are led through their respective valves (12, 15, 18) and the row of pump channels (23, 24, 25) in the multi-channel pump (21) for measurement of a standard signal, that the sample (8) is led through the first pump channel (22) in the multi-channel pump (21), that the concentration in the sample (8) is calculated as the result of the difference between the sample signal and the background signal divided by the difference between the standard signal and the background signal, which result is multiplied by the concentration of the standard.

2. Method according to claim 1, where for instance two standards are chosen, **characterized** in that the concentration of the sample (8) is calculated as the result of the difference between the sample signal and the first background signal divided by the difference between the second and first background signal, which result is multiplied by the difference between the concentration of the second and first standard.

3. Method according to claims 1-2, **characterized** in that the microprocessor, via the row of valves (12, 15, 18), can change between the introduction of reagents (10, 13, 16) and water (11, 14, 17).

4. Method according to any one of claims 1-3, **characterized** in that via a pump channel (26) in the multi-channel pump (21) and a valve (20), the microprocessor can lead water (19) to the sample (8), which is thereby diluted to a specific degree before it is led to the first pump channel (22) in the multi-channel pump (21).

5. Method according to any one of claims 1-4, **characterized** in that the mixture of reagent (10, 13, 16) and sample (8) is first conveyed to the detector (31) via the row of valves (9, 12, 15, 18) and the row of pump channels (22, 23, 24, 25) and is detected, after which a mixture of standard (4) and reagent (2, 6) is introduced via further valves (3, 5, 7), the valves of the row of valves (9, 12, 15, 18) and the pump channels (22, 23, 24, 25) in the multi-channel pump (21) to the mixture (27, 28, 29) which is detected, after which the concentration of the sample can be calculated.

6. Method according to any one of claims 1-5, **characterized** in that the capacity of the multichannel pump (21) can be regulated, partly in accordance with the degree of the reaction in the mixture (27, 28, 29), and partly in accordance with the number of measurements per unit of time.

## Patentansprüche

1. Verfahren zum Messen mindestens einer Komponente in einer Flüssigkeit durch Einleiten eines Reagens in eine Flüssigkeitsprobe, wonach eine Reaktion stattfindet, die in einem Detektor gemessen wird, durch welches Verfahren die Mischung aus der Probe und dem Reagens durch einen Mikroprozessor eingestellt wird, der eine Reihe von Ventilen (9, 12, 15, 18) steuert, die der Probe (8) Reagenzien (10, 13, 16) zuführen, und der eine Mehrkanalpumpe (21) steuert, die vorgegebene Mengen der Probe (8) und der Reagenzien zum Vermischen (27, 28, 29) über eine Reihe von Pumpenkanälen (22, 23, 24, 25) ausgibt, wonach die Mischung zum Detektor (21) gefördert wird, **dadurch gekennzeichnet**, daß dem ersten Pumpenkanal (22) in der Mehrkanalpumpe (21) vor der Probenerfassung Wasser (19) zugeführt wird, woraufhin ein Hintergrundsignal gemessen wird, daß die erforderlichen Reagenzien (10, 13, 16) durch ihre jeweiligen Ventile (12, 15, 18) und die Reihe von Pumpenkanälen (23, 24, 25) in der Mehrkanalpumpe (21) geleitet werden, um ein Standardsignal zu messen, daß die Probe (8) durch den ersten Pumpenkanal (22) in der Mehrkanalpumpe (21) geführt wird und daß die Konzentration in der Probe (8) als Ergebnis der Differenz zwischen dem Probensignal und dem Hintergrundsignal, geteilt durch die Differenz zwischen dem Standardsignal und dem Hintergrundsignal, welches Ergebnis mit der Konzentration des Standards multipliziert wird, berechnet wird.

2. Verfahren nach Anspruch 1, bei dem z. B. zwei Standards gewählt werden, **dadurch gekennzeichnet**, daß die Konzentration der Probe (8) als Ergebnis der Differenz zwischen dem Probensignal und dem ersten Hintergrundsignal geteilt durch die Differenz zwischen dem ersten und zweiten Hintergrundsignal, welches Ergebnis mit der Differenz zwischen den Konzentrationen des ersten und zweiten Standards multipliziert wird, berechnet wird.

3. Verfahren nach einem der Ansprüche 1 - 2, **dadurch gekennzeichnet**, daß der Mikroprozessor über die Reihe von Ventilen (12, 15, 18) zwischen der Einleitung der Reagenzien (10, 13, 16) und von Wasser (11, 14, 17) umschalten kann.

4. Verfahren nach einem der Ansprüche 1 - 3, **dadurch gekennzeichnet**, daß der Mikroprozessor über einen Pumpenkanal (26) in der Mehrkanalpumpe (21) und ein Ventil (20) der Probe (8) Wasser (19) zuführen kann, die dadurch auf ein spezifisches Maß verdünnt wird, bevor sie dem ersten Pumpenkanal (22) in der Mehrkanalpumpe (21) zugeführt wird.

5. Verfahren nach einem der Ansprüche 1 - 4, **dadurch gekennzeichnet**, daß die Mischung aus einem Reagens (10, 13, 16) und der Probe (8) zunächst über die Reihe von Ventilen (9, 12, 15, 18) und die Reihe von Pumpenkanälen (22, 23, 24, 25) zum Detektor (31) gefördert wird und gemessen wird, wonach eine Mischung aus einem Standard (4) und einem Reagens (2, 6) über weitere Ventile (3, 5, 7), die Ventile der Reihe von Ventilen (9, 12, 15, 18) und die Pumpenkanäle (22, 23, 24, 25) in der Mehrkanalpumpe (21) in die gemessene Mischung (27, 28, 29) eingeleitet wird, wonach die Konzentration der Probe berechnet werden kann.

6. Verfahren nach einem der Ansprüche 1 - 5, **dadurch gekennzeichnet**, daß die Kapazität der Mehrkanalpumpe (21) eingestellt werden kann, und zwar teilweise gemäß dem Reaktionsgrad in der Mischung (27, 28, 29) und teilweise gemäß der Anzahl von Messungen pro Zeiteinheit.

## Revendications

1. Procédé de dosage d'au moins un constituant d'un fluide par introduction d'un réactif dans un échantillon de ce fluide, après quoi a lieu une réaction qui est mesurée dans un détecteur, procédé dans lequel le mélange de l'échantillon et du réactif est commandé par un microprocesseur qui commande une rangée de vannes (9, 12, 15, 18) qui introduisent des réactifs (10, 13, 16) dans l'échantillon (8), et commande une pompe multivoie (21) qui délivre par une rangée de voies (22, 23, 24, 25) une quantité donnée d'échantillon (8) et de réactifs pour leur mélange (27, 28, 29), après quoi le mélange est conduit au détecteur (31), caractérisé par le fait qu'avant l'échantillonnage, de l'eau (19) est envoyée à la première voie (22) de la pompe multivoie (21), après quoi un signal de fond est mesuré, que les réactifs nécessaires (10, 13, 16) sont envoyés par leurs vannes respectives (12, 15, 18) et par la rangée de voies (23, 24, 25) de la pompe multivoie (21) pour la mesure d'un signal d'étalon, que l'échantillon (8) est envoyé par la première voie (22) de la pompe multivoie (21), que la concentration dans l'échantillon (8) est calculée comme rapport de la différence entre le signal d'échantillon et le signal de fond à la différence entre le signal d'étalon et le signal de fond, multiplié par la concentration de l'étalon.

2. Procédé selon la revendication 1, dans lequel sont utilisés par exemple deux étalons, caractérisé par le fait que la concentration de l'échantillon (8) est calculée comme rapport de la différence entre le signal d'échantillon et le premier signal de fond à la différence entre le deuxième et le premier signaux de fond, multiplié par la différence entre les concentrations du deuxième et du premier étalons.

3. Procédé selon l'une des revendications 1 et 2, caractérisé par le fait que le microprocesseur peut, par l'intermédiaire de la rangée de vannes (12, 15, 18), produire le passage de l'introduction de réactifs (10, 13, 16) à l'introduction d'eau (11, 14, 17) et vice-versa.

4. Procédé selon l'une des revendications 1 à 3, caractérisé par le fait que par l'intermédiaire d'une voie (26) de la pompe multivoie (21) et d'une vanne (20), le microprocesseur peut envoyer de l'eau (19) à l'échantillon (8), qui est ainsi dilué à un degré déterminé avant d'être envoyé à la première voie (22) de la pompe multivoie (21).

5. Procédé selon l'une des revendications 1 à 4, caractérisé par le fait que le mélange de réactif (10, 13, 16) et d'échantillon (8) est d'abord envoyé au détecteur (31) par la rangée de vannes (9, 12, 15, 18) et la rangée de voies (22, 23, 24, 25) de la pompe et est détecté, après quoi un mélange d'étalon (4) et de réactif (2, 6) est introduit par d'autres vannes (3, 5, 7), les vannes de la rangée de vannes (9, 12, 15, 18) et les voies (22, 23, 24, 25) de la pompe multivoie (21) dans le mélange (27, 28, 29) qui est détecté, après quoi la concentration de l'échantillon peut être calculée.

6. Procédé selon l'une des revendications 1 à 5, caractérisé par le fait que le débit de la pompe multivoie (21) peut être réglé, en partie selon le degré de la réaction dans le mélange (27, 28, 29) et en partie selon le nombre de mesures par unité de temps.
